Europäisches Patentamt

European Patent Office

Office européen des brevets

(19)

(11) Veröffentlichungsnummer: **0 293 460**
**B1**

(12) **EUROPÄISCHE PATENTSCHRIFT**

(45) Veröffentlichungstag der Patentschrift: **07.11.90**

(21) Anmeldenummer: **88900571.6**

(22) Anmeldetag: **04.12.87**

(86) Internationale Anmeldenummer:
**PCT/EP87/00758**

(87) Internationale Veröffentlichungsnummer:
**WO 88/04348 16.06.88 Gazette 88/13**

(51) Int. Cl.⁵: **E 04 D 13/03, E 04 B 1/49**

(54) DACHFLÄCHENFENSTER MIT MONTAGEWINKEL.

(30) Priorität: **12.12.86 DE 3642464**

(43) Veröffentlichungstag der Anmeldung:
**07.12.88 Patentblatt 88/49**

(45) Bekanntmachung des Hinweises auf die
Patenterteilung:
**07.11.90 Patentblatt 90/45**

(84) Benannte Vertragsstaaten:
**AT BE CH DE FR GB IT LI LU NL SE**

(56) Entgegenhaltungen:
**AU-B- 408 965**
**BE-A- 835 354**
**DE-A-2 332 086**
**DE-A-2 436 049**
**GB-A-2 033 038**
**US-A-1 626 589**

(73) Patentinhaber: **V. KANN RASMUSSEN
INDUSTRI A/S
10 Tobaksvejen
DK-2860 Soborg (DK)**

(72) Erfinder: **SPECK, Emil
Dachsweg 4
D-2241 Weddingstedt (DE)**
Erfinder: **SONNEBORN, Siegfried
Dorfstrasse 50
D-2081 Tangstedt (DE)**
Erfinder: **OLSEN, Kaj
Nordre Paradisvej 38
DK-2840 Holte (DK)**

(74) Vertreter: **Meyer, Ludgerus
Patentanwälte Meyer, Stach, Vonnemann
Jungfernstieg 38
D-2000 Hamburg 36 (DE)**

Courier Press, Leamington Spa, England.

**Beschreibung**

Die Erfindung betrifft ein Dachflächenfenster mit an dessen Blendrahmen-Seitenstücken festzulegenden Montagewinkeln, die jeweils einen ersten Schenkel, einen zu diesem rechtwinklig verlaufenden zweiten Schenkel und in beiden Schenkeln angeordnete Halterungslöcher zur Aufnahme von in das Blendrahmen-Seitenstück bzw. in tragende Dachteile einzutreibenden Halterungselementen aufweisen, ferner entsprechend ausgestattete Montagewinkel. Ein derartiges Dachflächenfenster ist z.B. aus der DE-A-2436049 bekannt.

Dachflächenfenster dieser Art werden normalerweise durch die Montagewinkel und diese festlegende Einschlagschrauben an unter der Dacheindeckung liegende Dachsparren oder vergleichbaren Teilen der Dachkonstruktion befestigt. Beim Einbau ist es wichtig, die Einbaustellung des Dachflächenfensters an die Dacheindeckung anzupassen, welche die Dichtigkeit zwischen Blendrahmen und Dach sichern soll. Hierzu kommt es darauf an, daß die Montagewinkel an den Seitenstücken des Blendrahmens jeweils so befestigt werden, daß die für das jeweilige Dach erforderliche Lage des Blendrahmens relativ zur Dachfläche erreicht wird. Da die meist serienmäßig gefertigten Dachflächenfenster mittels der zugehörigen Montagewinkel in Dächer ganz verschiedener Konstruktion eingebaut werden müssen, wobei insbesondere die Abstände und Abmessungen der Dachsparren, Dachlatten, etc. sehr unterschiedlich sind, ist es für die mit dem Einbau des Dachflächenfensters befaßte Person relativ mühsam und zeitraubend, durch Ausmessen am Dach und entsprechende Berechnungen die Punkte zu ermitteln, an denen die Montagewinkel an den Seitenstücken der Blendrahmen festgelegt werden müssen, um die richtige Einbauhöhe und eine zur Dachneigung genau parallele Neigung des Blendrahmens zu erzielen. Es geschieht dabei oft, daß das Fenster in falscher Höhe und/oder schief eingebaut wird. Außerdem ist zur Durchführung des Einbaus vielfach eine zusätzliche Hilfsperson erforderlich.

Aus dem DE-U-84 03 247 ist bereits ein Verbindungsbeschlag für Holzkonstruktionen bekannt, der aus einer flachen oder abgewinkelten Platte mit Löchern zur Aufnahme von Nägeln besteht und einen aus der Platte nahe deren Ende ausgestanzten und herausgebogenen Fixierungsdorn aufweist. Aus der US-A-2 066 006 kennt man ferner einen Befestigungswinkel für Wandverkleidungsplatten, der an einer Endkante mehrere auswärts umgebogene Spitzen aufweist, die in ein tragendes Rahmenwerk auf Holzleisten eingetrieben werden, worauf die zu halternde Wandverkleidungsplatte mittels einer mit seitlichem Spiel durch ein Loch im federnd ausgebildeten zweiten Schenkel des Befestigungswinkels geführten Gewindebolzens begrenzt verschiebbar gehaltert wird. Derartige Beschläge eignen sich jedoch nicht zur raschen, gleichmäßig ausgerichteten Festlegung von Dachflächenfenstern.

Aufgabe der Erfindung ist es nun, ein Dachflächenfenster bzw. zugehörigen Montagewinkel zu schaffen, die mit einfachen Mitteln einen wesentlich rascheren, zuverlässig ausgerichteten Einbau durch nur eine Person ermöglichen.

Zur Lösung dieser Aufgabe ist das Dachflächenfenster mit Montagewinkeln der eingangs genannten Art erfindungsgemäß mit den Merkmalen des Patentanspruches 1 ausgestattet.

Durch das Zusammenwirken dieser Merkmale können die Montagewinkel durch einfaches Eindrücken ihrer Flachdorne in die für die jeweils erforderliche Einbauhöhe des Fensters passende Halterungsnut des Blendrahmen-Seitenstücks ohne großen Meß- und Berechnungsaufwand rasch und sicher am Blendrahmen vorfixiert und dann in herkömmlicher Weise durch Einschlagschrauben oder sonstige Halterungselemente daran endgültig festgelegt werden.

Vorteilhafte weitere Ausgestaltungen der Befestigungsanordnung sind in den Unteransprüchen 2 bis 9 beschrieben.

Gegenstand der Erfindung sind ferner zugehörige Montagewinkel mit den Merkmalen der Patentansprüche 10 bis 13 sowie Dachflächenfenster mit den Merkmalen der Patentansprüche 14 und 15.

Im folgenden werden bevorzugte Ausführungsformen des Dachflächenfensters und der Montagewinkel unter Bezugnahme auf die beigefügten Zeichnungen weiter erläutert.

Es zeigen:

Figur 1 eine perspektivische Ansicht eines Montagewinkels,

Figur 2 eine schematische perspektivische Ansicht eines Dachflächenfensters beim Einbau auf dem Dach und

Figur 3 eine schematische Darstellung der verschiedenen Befestigungsstellungen des Montagewinkels am Blendrahmen.

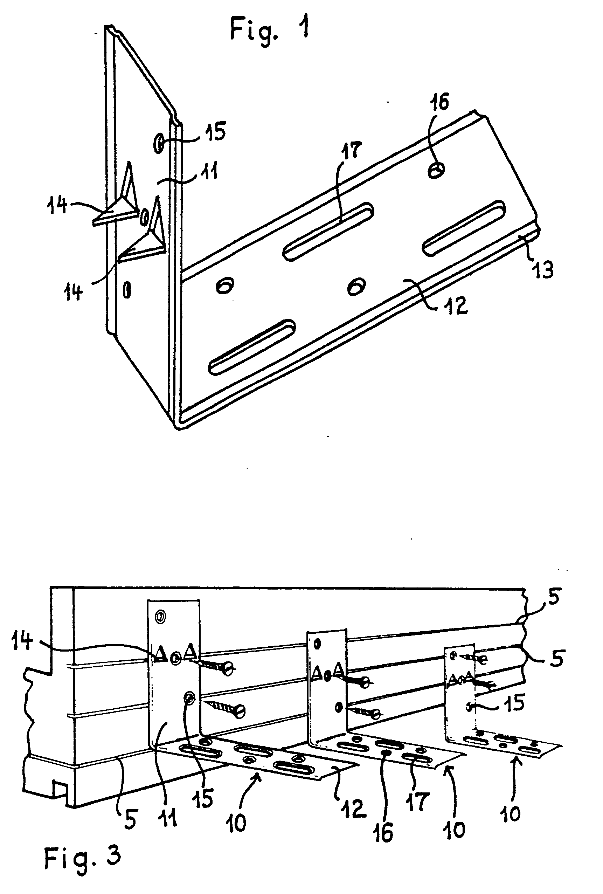

Der in Figur 1 dargestellte Montagewinkel 10 besteht aus etwa 2 mm starkem Stahlblech und besitzt einen ersten Schenkel 11 und einen gegenüber diesem rechtwinklig abgewinkelten zweiten Schenkel 12, die beide etwas angebördelte Seitenränder 13 haben. Im zweiten Schenkel 12 sind Halterungs-Rundlöcher 16 und Langlöcher 17 zur Aufnahme von vorzugsweise als Einschlagschrauben ausgebildeten Halterungselementen angeordnet. Im ersten Schenkel 11 sind bei der dargestellten Ausführungsform drei in einer schrägen Reihe beabstandet angeordnete Halterungs-Rundlöcher 15 vorgesehen. Beiderseits des mittleren Halterungs-Rundloches 15 sind durch Stanzen und einstückiges Umbiegen erzeugte Flachdorne 14 mit dreieckiger Form, einem Spitzenwinkel von etwa 30°, einer Länge von 12 mm und einer dem ersten Schenkel 11 entsprechenden Materialstärke angeordnet.

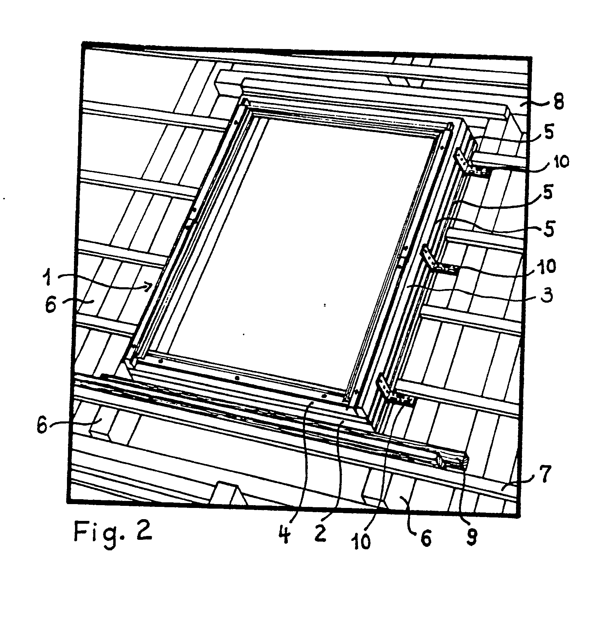

In Figur 2 ist ein Dachflächenfenster 1 mit einem Blendrahmen 2 und einem darin um eine mittlere Schwingachse verschwenkbaren Flügelrahmen 4 in der Einbaustellung auf der Dachsparren 6 und horizontale Dachlatten 7 aufweisenden Dachkonstruktion dargestellt. Da der lichte Abstand der Dachsparren kleiner ist als die Fensterbreite, wurde nach Entfernung eines Sparrenteils über und unter dem Dachflächenfenster je ein sogenannter Wechsel 8 eingezogen. Während des Einbaus wurde außerdem unter dem Dachflächenfenster zur Arbeitserleichterung eine lose Hilfslatte 9 eingelegt.

Das dargestellte Dachflächenfenster 1 ist an den äußeren Seitenflächen seiner beiden Blendrahmen-Seitenstücke 3 jeweils mit drei über deren ganze Länge durchgehenden Halterungsnuten 5 versehen, die jeweils eine Nutbreite von 1,5mm und eine Nuttiefe von 8mm aufweisen. Der Mittenabstand der Nuten betrug 25mm.

Zur Befestigung der Montagewinkel 10 am Blendrahmen 2 werden zunächst die Flachdorne 14 der Montagewinkel 10 durch einfaches Eindrücken von Hand oder mit einem leichten Hammerschlag in die jeweils für die Einbauhöhe geeignete der drei Halterungsnuten 5 eingedrückt, so daß der Montagewinkel 10 am Blendrahmen 2 damit in seiner ausgerichteten Stellung vorfixiert ist. Nun kann die Bedienungsperson durch zwei der drei im ersten Schenkel 11 vorgesehenen Halterungs-Rundlöcher 15 zur endgültigen Fixierung der Montagewinkel Einschlagschrauben in das Blendrahmen-Seitenstück 3 einschlagen. Da die Bedienungsperson nach dem Eindrücken der Flachdorne 14 in die Halterungsnuten 5 beide Hände frei hat und den Montagewinkel 10 nicht festzuhalten braucht, kann sie ohne Schwierigkeiten die benötigten Einschlagschrauben und Werkzeuge ergreifen und beide Hände zum Einschlagen der Schrauben benutzen, so daß keine Hilfsperson benötigt wird.

Wie Figur 3 zeigt, können die Montagewinkel 10 je nach der Konstruktion und den Abmessungen der Dachsparren oder der sonstigen tragenden Dachteile mit ihren Flachdornen 14 in die jeweils zur Erzielung der gewünschten Einbauhöhe des Blendrahmens am besten geeignete der drei Halterungsnuten 5 eingedrückt werden. Wenn die Montagewinkel 10 in dieser Weise am Blendrahmen 2 dauerhaft festgelegt sind, kann die Bedienungsperson durch die im zweiten Schenkel 12 vorgesehenen Halterungs-Rundlöcher 16 und die Langlöcher 17 weitere Einschlagschrauben in die Dachsparren 6 eintreiben. Wenn an jedem Blendrahmen-Seitenstück 3 jeweils drei Montagewinkel 10 angebracht sind, kann zunächst bei zwei Montagewinkeln 10 jeweils nur eine Einschlagschraube durch ein Langloch des zweiten Schenkels 12 eingeschlagen und beim dritten Montagewinkel eine Einschlagschraube in ein Halterungs-Rundloch eingeschlagen werden, so daß das Dachflächenfenster in diesem Zustand noch in der jeweils gewünschten Weise ausgerichtet und an etwaige Ungleichmäßigkeiten des Daches angepaßt werden kann, bevor bei allen Montagewinkeln jeweils weitere Einschlagschrauben in Halterungs-Rundlöcher 16 in der Weise fest eingeschlagen werden, daß zwei der Halterungs-Rundlöcher 16 jedes Montagewinkels Einschlagschrauben enthalten.

Da die Halterungsnuten 5 am Blendrahmen 2 ohne Mehraufwand beim ohnehin erforderlichen Profilieren der vorgefertigten Blendrahmen-Seitenstücke 3 mit eingebracht werden können und die Montagewinkel 10 mit sehr geringem Aufwand mit durch Stanzen und einstückiges Umbiegen erzeugten Flachdornen 14 versehen werden können, wird insgesamt mit einfachsten Mitteln eine wesentlich verbesserte Befestigungsanordnung für Dachflächenfenster und ein zeit- und arbeitssparendes Befestigungsverfahren erreicht, welche für die mit dem Einbau befaßten Personen die gefährlichen Einbauarbeiten auf dem Dach wesentlich erleichtert.

Das vorstehend anhand bevorzugter Ausführungsformen erläuterte Dachflächenfenster sowie die zugehörigen Montagewinkel können vom Fachmann je nach den Anforderungen in verschiedener Weise zweckentsprechend abgewandelt werden, sofern dabei die besondere Anordnung von in einer Ebene symmetrisch beabstandeten Flachdornen bzw. der zur Aufnahme von Flachdornen ausgelegten Halterungsnuten erhalten bleibt.

## Patentansprüche

1. Dachflächenfenster (1) mit an dessen Blendrahmen-Seitenstücken festzulegenden Montagewinkeln (10), die jeweils einen ersten Schenkel (11), einen zu diesem rechtwinklig verlaufenden zweiten Schenkel (12) und in beiden Schenkeln angeordnete Halterungslöcher (15, 16, 17) zur Aufnahme von in das Blendrahmen-Seitenstück bzw. in tragende Dachteile einzutreibenden Halterungselementen aufweisen, dadurch gekennzeichnet, daß

a) jeder Montagewinkel (10) zum Vorfixieren am Blendrahmen (2) an der vom zweiten Schenkel (12) abgewandten Stegfläche des ersten Schenkels (11) mindestens zwei in einer zum zweiten Schenkel (12) parallelen Ebene rechtwinklig auswärts vorspringende Flachdorne (14) trägt und

b) in die äußeren Seitenflächen jedes Blendrahmen-Seitenstücks (3) mindestens eine in dessen Längsrichtung verlaufende Halterungsnut (5) für die Flachdorne (14) mit höchstens deren Materialstärke entsprechender Nutbreite eingetieft sind.

2. Dachflächenfenster mit Montagewinkeln nach Anspruch 1, dadurch gekennzeichnet, daß die Montagewinkel (10) aus dem ersten Schenkel (11) nach Stanzung einstückig herausgebogene Flachdorne (14) aufweisen.

3. Dachflächenfenster mit Montagewinkeln nach Anspruch 1 oder 2, dadurch gekennzeichnet, daß die Flachdorne (14) eine die Nuttiefe der Halterungsnut (5) etwas übersteigende Dornlänge aufweisen.

4. Dachflächenfenster mit Montagewinkeln nach einem der Ansprüche 1 bis 3, dadurch gekennzeichnet, daß die Flachdorne (14) dreieckige Form mit einem Spitzenwinkel von höchstens etwa 35° aufweisen.

5. Dachflächenfenster mit Montagewinkeln nach einem der Ansprüche 1 bis 4, dadurch gekennzeichnet, daß zwei Flachdorne (14) jeweils beiderseits der Längsachse des ersten Schenkels (11) voneinander symmetrisch beabstandet angeordnet sind.

6. Dachflächenfenster mit Montage winkeln nach einem der Ansprüche 1 bis 5, dadurch gekennzeichnet, daß die Flachdorne (14) in einem mittleren Bereich der Länge des ersten Schenkels (11) angeordnet sind.

7. Dachflächenfenster mit Montagewinkeln nach einem der Ansprüche 1 bis 5, dadurch gekennzeichnet, daß die Flachdorne (14) am freien Ende des ersten Schenkels (11) rechtwinklig auswärts umgebogen sind.

8. Dachflächenfenster mit Montagewinkeln nach einem der Ansprüche 1 bis 7, dadurch gekennzeichnet, daß im ersten Schenkel (11) mindestens drei in dessen Längsrichtung jeweils um den Abständen der Halterungsnuten (5) am Blendrahmen-Seitenstück (3) entsprechende Strecken voneinander beabstandete Halterungs-Rundlöcher (15) zur Aufnahme von Halterungsschrauben angeordnet sind.

9. Dachflächenfenster mit Montagewinkeln nach einem der Ansprüche 1 bis 8, dadurch gekennzeichnet, daß im zweiten Schenkel (12) Halterungs-Rundlöcher (16) und Halterungs-Langlöcher (17) zur Aufnahme von Halterungsschrauben angeordnet sind.

10. Montagewinkel (10) zum Einbau von Dachflächenfenstern 1 mit einem ersten Schenkel (11), einem zu diesem rechtwinklig verlaufenden zweiten Schenkel (12), in beiden Schenkeln angeordneten Löchern (15, 16, 17) zur Aufnahme von Befestigungselementen und aus dem ersten Schenkel zu der vom zweiten Schenkel abgewandten Seite in einer zu diesem parallelen Ebene einstückig herausgebogenen Flachdornen (14), dadurch gekennzeichnet, daß die Flachdorne (14) im mittleren Abschnitt der Länge des ersten Schenkels (11) beiderseits eines Halterungs-Rundloches (15) angeordnet sind und daß der zweite Schenkel (12) mehrere in Längsrichtung voneinander beabstandete Halterungs-Rundlöcher (16) und mindestens ein Halterungs-Langloch (17) aufweist.

11. Montagewinkel nach Anspruch 10, dadurch gekennzeichnet, daß beide Flachdorne (14) jeweils dreieckig mit einem spitzen Winkel von höchstens 35° ausgebildet sind.

12. Montagewinkel nach Anspruch 10 oder 11, dadurch gekennzeichnet, daß der erste Schenkel (11) mindestens drei vorzugsweise in einer zu dessen Längsachse schräg verlaufenden Reihe angeordnete, in Längsrichtung des Schenkels (11) jeweils um den Abständen der Halterungsnuten (5) am zugeordneten Blendrahmen-Seitenstück (3) entsprechende Strecken voneinander beabstandete Halterungs-Rundlöcher (15) zur Aufnahme von Halterungsschrauben aufweist.

13. Montagewinkel nach Anspruch 12, dadurch gekennzeichnet, daß im zweiten Schenkel (12) drei über dessen Länge beabstandete Paare aus jeweils einem Langloch (17) und einem seitlich daneben liegenden Halterungs-Rundloch (16) angeordnet sind, wobei die Langlöcher (17) relativ zur Längsachse des zweiten Schenkels (12) alternierend seitlich versetzt sind.

14. Dachflächenfenster (1) mit einem über Montagewinkel (10) an der Dachkonstruktion festlegbaren Blendrahmen (2), dadurch gekennzeichnet, daß in die äußeren Seitenflächen jedes Blendrahmen-Seitenstücks (3) eine oder mehrere in vorbestimmten Abständen in dessen Längsrichtung verlaufende Halterungsnuten (5) mit höchstens der Materialstärke von an den Montagewinkeln (10) angebrachten Flachdornen (14) entsprechender Nutbreite eingetieft sind.

15. Dachflächenfenster nach Anspruch 14, dadurch gekennzeichnet, daß die Halterungsnuten jeweils über im wesentlichen die ganze Länge der Blendrahmen-Seitenstücke (3) durchgehen und eine relativ zur Länge der zugehörigen Flachdorne (14) etwas geringere Nuttiefe von vorzugsweise 2 bis 15mm und insbesondere 6 bis 12mm aufweisen.

**Revendications**

1. Lucarne (1) comportant des cornières de montage (10) à fixer sur les éléments latéraux du dormant de la lucarne, cornières qui comprennent respectivement une première branche (11) et une seconde branche (12) perpendiculaire à la première, ainsi que des trous de fixation (15, 16, 17) prévus dans les deux branches pour recevoir des éléments de fixation à enfoncer dans l'élément latéral de dormant ou la partie de toit porteuse, caractérisée en ce que:

a) pour sa fixation préalable sur le dormant (2), chaque cornière de montage (10) comporte sur sa surface opposée à la seconde branche (2), dans la première branche (11), au moins deux broches plates (14) en saillie perpendiculairement, dans un plan parallèle à la seconde branche (12), et

b) les surfaces latérales extérieures de chaque élément latéral (3) de dormant comportent au moins une rainure de fixation (5) longitudinale pour recevoir les broches plates (14), la largeur de cette rainure correspondant au plus à l'épaisseur du matériau.

2. Lucarne à cornières de montage selon la revendication 1, caractérisée en ce que la cornière de montage (10) comporte des broches plates (14) pliées en saillie, après matriçage en une seule pièce dans la première branche (11).

3. Lucarne à cornières de montage selon la revendication 1 ou 2, caractérisée en ce que les broches plates (14) ont une longueur qui dépasse légèrement la profondeur de la rainure de fixation (5).

4. Lucarne à cornières de montage selon l'une des revendications 1 à 3, caractérisée en ce que les broches plates (14) ont une forme triangulaire avec un angle aigu au moins de l'ordre de 35°.

5. Lucarne à cornières de montage selon l'une des revendications 1 à 4, caractérisée par chaque fois deux broches plates (14) respectivement de part et d'autre de l'axe longitudinal de la première branche (11), et distantes de manière symétrique.

6. Lucarne à cornières de montage selon l'une des revendications 1 à 5, caractérisée en ce que les broches plates (14) sont prévues dans une zone médiane de la longueur de la première branche (11).

7. Lucarne à cornières de montage selon l'une des revendications 1 à 5, caractérisée en ce que les broches plates (14) sont recourbées vers l'extérieur, de manière perpendiculaire, à l'extrémité libre de la première branche (11).

8. Lucarne à cornières de montage selon l'une des revendications 1 à 7, caractérisée en ce que la première branche (11) comporte au moins trois trous ronds de fixation (15) distants les uns des autres d'une distance longitudinale correspondant respectivement à la distance des rainures de fixation (5) de l'élément latéral (3) du dormant, ces trous recevant des vis de fixation.

9. Lucarne à cornières de montage selon l'une quelconque des revendications 1 à 8, caractérisée en ce que la seconde branche (12) comporte des trous ronds de fixation (16) et des trous oblongs de fixation (17) pour recevoir des vis de fixation.

10. Cornière de montage (10) pour l'installation de lucarne (1), cornière ayant une première branche (11) et une seconde branche (12) perpendiculaire à la première et des trous (15, 16, 17) prévus dans les deux branches pour recevoir des éléments de fixation ainsi que sur la première branche, des broches plates (14) recourbées en une seule pièce du côté opposé de celles tournées vers la seconde branche et dans un plan sensiblement parallèle à cette branche, cornière caractérisée en ce que les broches plates (14) sont prévues dans la section médiane de la longueur de la première branche (11), de part et d'autre d'un trou rond de fixation (15) et en ce que la seconde branche (12) comporte plusieurs trous ronds de fixation (16) écartés les uns des autres dans la direction longitudinale et au moins un trou oblong de fixation (17).

11. Cornière de montage selon la revendication 10, caractérisée en ce que les deux broches plates (14) ont chaque fois une forme de triangle avec un angle aigu d'au moins 35°.

12. Cornière de montage selon la revendication 10 ou 11, caractérisée en ce que la première branche (11) comporte de préférence trois trous ronds de fixation (15) pour recevoir des vis de fixation, ces trous alignés suivant une ligne inclinée par rapport à l'axe longitudinal, étant distants d'une distance qui, dans la direction longitudinale de la branche (11) correspond chaque fois à l'intervalle des rainures de fixation (5) prévues sur l'élément latéral de dormant (3) correspondant.

13. Cornière de montage selon la revendication 12, caractérisée en ce que la seconde branche (12) comporte trois paires éloignées suivant la longueur de trous ronds de fixation (16) juxtaposés à un trou oblong (17), les trous oblongs (17) étant décalés latéralement de manière alternée par rapport à l'axe longitudinal de la seconde branche (12).

14. Lucarne (1) ayant un dormant (2) qui se fixe sur la construction du toit par l'intermédiaire de cornières de montage (10), lucarne caractérisée en ce que dans les surfaces latérales extérieures de chaque élément latéral (3) du dormant, on a une ou plusieurs rainures de fixation (5), longitudinales, à un ou plusieurs intervalles prédéterminés, ces rainures ayant une largeur au plus égale à l'épaisseur de la matière des broches plates (14) réalisées dans les cornières de montage (10).

15. Lucarne selon la revendication 14, caractérisée en ce que les rainures de fixation sont respectivement continues sur pratiquement toute la longueur de l'élément latéral (3) du dormant et ont une profondeur de rainure sensiblement plus faible que la longueur de la broche correspondante (14), cette profondeur de rainure étant de préférence comprise entre 2 et 15mm et notamment entre 6 et 12mm.

**Claims**

1. Roof window (1) with mounting brackets (10) to be fixed to its window frame side members, each mounting bracket having a respective first arm (11), a second arm (12) extending at right-angles thereto and fixing holes (15, 16, 17) provided in both arms for receiving fixing elements to be driven into the window frame side member or into supporting roof parts, characterised in that

a) each mounting bracket (10) carries on the web surface of the first arm (11) facing away from the second arm (12) at least two flat spikes (14) projecting outwards at right-angles in a plane parallel to the second arm (12) and

b) at least one fixing groove (5) for the flat spikes (14), running in the longitudinal direction of the window frame side member (3) and having a width which is at most equal to the material thickness thereof, is sunk into the outer side faces of each window frame side member (3).

2. Roof window with mounting brackets according to claim 1, characterised in that the mounting brackets (10) have flat spikes (14) bent integrally out of the first arm (11) after pressing.

3. Roof window with mounting brackets according to claim 1 or 2, characterised in that the flat spikes (14) have a length which slightly surpasses the groove depth of the fixing groove (5).

4. Roof window with mounting brackets according to one of claims 1 to 3, characterised in that the flat spikes (14) have a triangular form with an apex angle of at the most approximately 35°.

5. Roof window with mounting brackets according to one of claims 1 to 4, characterised in that two flat spikes (14) are mounted on either side of the longitudinal axis of the first arm (11) and are spaced symmetrically from one another.

6. Roof window with mounting brackets according to one of claims 1 to 5, characterised in that the flat spikes (14) are mounted in a central region of the length of the first arm (11).

7. Roof window with mounting brackets according to one of claims 1 to 5, characterised in that the flat spikes (14) are bent outwards at right-angles at the free end of the first arm (11).

8. Roof window with mounting brackets according to one of claims 1 to 7, characterised in that in the first arm (11) at least three round fixing holes (15), which are spaced in the longitudinal direction of said first arm in each case by distances corresponding to those of the fixing grooves (5) on the window frame side member (3), are provided to receive fixing screws.

9. Roof window with mounting brackets according to one of claims 1 to 8, characterised in that round fixing holes (16) and slots (17) are provided in the second arm (12) to receive fixing screws.

10. Mounting bracket (10) for the installation of roof windows (1) having a first arm (11), a second arm (12) extending at right-angles thereto, holes (15, 16, 17) provided in both arms for receiving fixing elements and flat spikes (14) bent integrally from the first arm to the side facing away from the second arm in a plane parallel to said second arm, characterised in that the flat spikes (14) are mounted in the central section of the length of the first arm (11) on both sides of a round fixing hole (15) and in that the second arm (12) has a plurality of round fixing holes (16) spaced from one another in the longitudinal direction and at least one fixing slot (17).

11. Mounting bracket according to claim 10, characterised in that both flat spikes (14) are triangular with an apex angle of at most 35°.

12. Mounting bracket according to claim 10 or 11, characterised in that the first arm (11) has at least three round fixing holes (15) for receiving fixing screws, preferably arranged in a row running obliquely to the longitudinal axis of said first arm and spaced apart in the longitudinal direction of the first arm (11) in each case by distances corresponding to those of the fixing grooves (5) on the associated window frame side member (3).

13. Mounting bracket according to claim 12, characterised in that three pairs of respectively one slot (17) and a round fixing hole (16) laterally adjacent thereto are provided in the second arm (12) and are spaced over its length, the slots (17) being laterally offset in an alternating manner in the longitudinal axis of the second arm (12).

14. Roof window (1) with a window frame (2) fixable to the roof construction via brackets (10), characterised in that one or more fixing grooves (5) with a groove width corresponding at most to the material thickness of flat spikes (14) mounted on the brackets (10) are sunk into the outer side faces of each window frame side member (3) and extend in the longitudinal direction thereof at specified intervals.

15. Roof window according to claim 14, characterised in that the fixing grooves each traverse substantially the whole length of the window frame side members (3) and have a slightly smaller groove depth than the length of the associated flat spikes (14) of preferably 2 to 15mm and in particular 6 to 12mm.

Fig. 1

Fig. 3

1

Fig. 2